# EUROPÄISCHE PATENTSCHRIFT

(11) **EP 0 557 866 B1**
(45) Veröffentlichungstag und Bekanntmachung des Hinweises auf die Patenterteilung: **19.07.1995**
(21) Anmeldenummer: 93102406.1
(22) Anmeldetag: 16.02.1993
(51) Int. Cl.: B23D 15/00, B30B 9/32, B23D 31/00

(54) **Schere zum Trennen von Schrott**
Scrap shear
Cisaille à ferrailles

(30) Priorität: 18.02.1992 DE 4204841
(43) Veröffentlichungstag der Anmeldung: 01.09.1993
(73) Patentinhaber: THYSSEN INDUSTRIE AG, 45128 Essen (DE)
(72) Erfinder: Webel, Achim, Dipl.-Ing., W-3501 Niestetal (DE)

(56) Entgegenhaltungen:
- DE-C- 845 438
- DE-C- 3 929 183

## Beschreibung

Die Erfindung betrifft eine Schere zum Trennen von Schrott nach dem Oberbegriff des Anspruchs 1.

Bei vorgenannten Scheren liegt das Problem vor, daß es insbesondere in Abhägigkeit von der Schrottqualität, der Schrottzusammensetzung und der Messergeometrie der Schermesser mehr oder weniger häufig zu einem Einziehen des Schrottes in den Scherspalt und zu einem Verklemmen des Messerschlittens kommt. Die hierbei auf den Messerschlitten, das Messerschlittenführungssystem und den Scherenständer wirkenden Kräfte können derart hoch sein, daß die maximal verfügbare Kraft des hydraulischen Messerantriebes nicht mehr ausreicht, um den Messerschlitten zurückzuziehen. In solchem Fall ist es notwendig, den verklemmten Schrott aus dem Scherspalt zu entfernen. Dies ist aber nur mit hohem Arbeitsaufwand möglich

Weiterhin kann eine große Klemmkraft bleibende Verformungen am Messerschlitten, an dessen Führung und am Scherenständer hervorrufen Der Ausgleich der eingetretenen Verformungen ist äußerst kompliziert und führt zu einem längeren Stillstand der Schere.

Um diesem Problem zu begegnen, ist aus der DE-PS 39 29 183 eine Schrottschere bekannt, bei der die Führungen des Messerschlittens - im Gegensatz zu bekannten, formschlüssig am Scherenständer angeordneten Führungendurch Schraubverbindungen mit den Säulen des Scherenständers lösbar verbunden sind.

Wird bei dieser Lösung der Schrott in den Scherspalt eingezogen und dabei verklemmt, so kann er durch Lösen einer oder beider Führungen vergleichsweise leicht aus dem nunmehr verbreiterten Scherspalt entfernt werden.

Abgesehen von dem nicht unbedeutenden Aufwand zum Lösen der Schrauben der Führungen kann mit dieser Schere ein Verklemmen des Schrottes im Scherspalt nicht verhindert und eine bleibende Deformation Von Teilen der Schere, die die Funktionsfähigkeit der Schere möglicherweise einschränkt, nicht vermieden werden.

Von daher liegt der Erfindung die Aufgabe zugrunde, eine Schere der eingangs genannten Art so auszubilden, daß in den Scherspalt eingezogener Schrott nicht zu Deformationen an der Schere und damit zu einer verminderten Funktionsfähigkeit derselben führt und daß der Schrott mit weiter Verringertem Aufwand aus dem Scherspalt entfernt werden kann.

Diese Aufgabe wird bei einer gattungsgemäßen Schere durch die im kennzeichnenden Teil des Anspruchs 1 vermittelte Lehre gelöst.

Die mit der Erfindung erzielten Vorteile resultieren im wesentlichen daraus, daß der Messerschlitten bei Auftreten einer in Horizontalrichtung wirkenden Komponente der Scherkraft vorbestimmbarer Größe seine Bewegungsebene verläßt und entgegen der Wirkung elastischer Elemente unter Bildung eines verbreiterten Scherspaltes horizontal ausweicht. In Ausweichstellung des Messerschlittens ist die Klemmkraft wesentlich geringer als die Kraft des hydraulischen Messerantriebes, so daß der Messerschlitten trotz wirkender Klemmkraft zurückgezogen werden kann und der Schrott allein durch diesen Bewegungsablauf freigegeben wird.

Da die elastischen Elemente derart dimensioniert sind, daß auch bei horizontal aus seiner Bewegungsebene verschobenem Messerschlitten eine Elastizität dieser Elemente erhalten bleibt, können Deformationen an der Schere infolge von im Scherspalt verklemmtem Schrottes nicht auftraten. Werden als elastische Elemente Federelemente eingesetzt, so ist deren Restfederweg Ausdruck der verbleibenden Elastizität

Grundsätzlich gibt es für die Anordnung der elastischen Elemente zwei Möglichkeiten, die auch Kombinierbar sind. Zum einen kann der Messerschlitten gegenüber seinen Führungen horizontal elastisch angeordnet und die Führungen am Scherenständer starr befestigt sein. Andererseits können bei starr geführtem Messerschlitten die Führungen am Scherenständer horizontal elastisch befestigt sein, so daß die Bewegung einer oder beider Führungen eine gebundene Bewegung des Messerschlittens erzeugt. Die nachfolgenden Ausführungen zu letzterer Ausbildung der Erfindung sind entsprechend auf die erstgenannte anwendbar.

In Ausgestaltung der Erfindung ist vorgesehen, die durchschnittlichen Vorspannungen der Führungen des Messerschlittens voneinander verschieden zu wählen, wobei eine der Führungen auch starr am Scherenständer angeordnet sein kann. Hierdurch führt ein Ausweichen des Messerschlittens zu einem Scherspalt unterschiedlicher Breite.

Bei Einsatz eines schräggestellten Messers wird zweckmäßig jene Führung mit einer geringeren Vorspannung versehen, auf deren Seite das Messer zuerst mit dem Schrott in Eingriff gelangt, um im Bedarfsfall eine Scherspalterweiterung ausreichender Größe zu erhalten.

Die elastischen Elemente sind bevorzugt als Einzelelemente im wesentlichen über den gesamten Verschiebeweg des Messerschlittens verteilt. Es ist jedoch auch möglich, einer jeden Führung nur ein, sich im wesentlichen über den gesamten Verschiebeweg des Messerschlittens erstreckendes, elastisches Element zuzuordnen.

Die Erfindung soll nachfolgend anhand von Zeichnungen, die mögliche Ausführungsformen der Erfindung darstellen, näher erläutert werden.

Es zeigen:
- Fig. 1: eine Frontansicht einer Schrottschere,
- Fig. 2: eine Seitenangicht der Schrottschere gem. Fig. 1,
- Fig. 3: ein Ringfederelement in vergrößerter Darstellung,
- Fig. 4: einen Horizontalschnitt einer Seite des Scherenständers in Höhe eines möglichen Elementes zur Verbindung der Messerschlittenführung mit dem Scherenständer,
- Fig. 5: einen Schnitt gemäß Fig. 4 mit einem weiteren möglichen Verbindungselement.

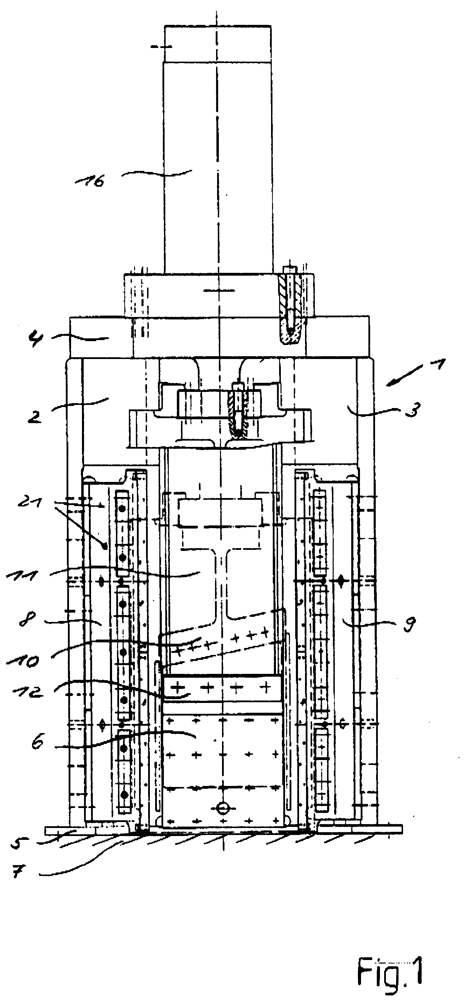

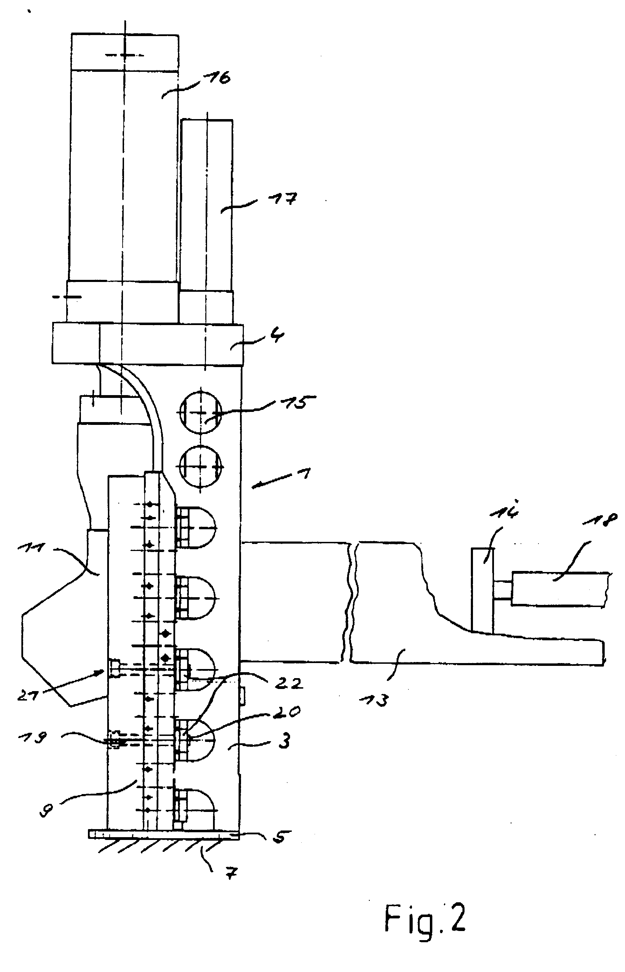

Die in den Fig. 1 und 2 dargestellte Schrottschere besteht aus einem Scherenständer 1, dessen Säulen 2, 3 oben durch ein Querhaupt 4 und unten durch eine Grundplatte 5 sowie eine Untermesserhalterung 6 zu einem starren Rahmen verbunden sind. Die Grundplatte 5 ist auf einem Fundament 7 befestigt. Die Säulen 2, 3 des Scherenständers 1 sind mit Gleitleisten 8,9 versehen, in denen ein Obermesser 10 tragender Messerschlitten 11 vertikal verschiebbar angeordnet ist. Das schräggestellte Obermesser 10 steht beim Schervorgang in Wirkverbindung mit einem an der Untermesserhalterung 6 starr angebrachten Untermesser 12. Eine der Aufnahme des Schrottes dienende Zuführmulde 13 ist mit einem in dieser langsverschiebbaren Stempel 14 versehen. Der vom Stempel 14 in Vorbereitung des Schervorganges über die Scherebene hinaus bewegte Schrott wird von einem, vor den Schermessern angeordneten und vertikal am Scherenständer 1 geführten, Stampfer 15 erfaßt, ggf. verdichtet und beim Schervorgang niedergehalten Die Betätigung des das Obermesser 10 tragenden Messerschlittens 11, des Stampfers 15 und des Stempels 14 erfolgt durch hydraulische Antriebe in Form von Zylinder-Kolben-Anordnungen 16, 17 und 18.

Wie aus Fig. 2 ersichtlich, ist die Gleitleiste 9, was entsprechend auch für die nicht sichtbare Gleitleiste 8 gem. Fig. 1 gilt, durch aus Schraube 19 und Mutter 20 bestehende Schraubverbindungen 21 mit der Säule 3 des Scherenständers 1 verbunden Zwischen der entsprechenden Innenfläche der Säule 3 und der Mutter 20 sind vorgespannte Ringfederelemente 22 angeordnet.

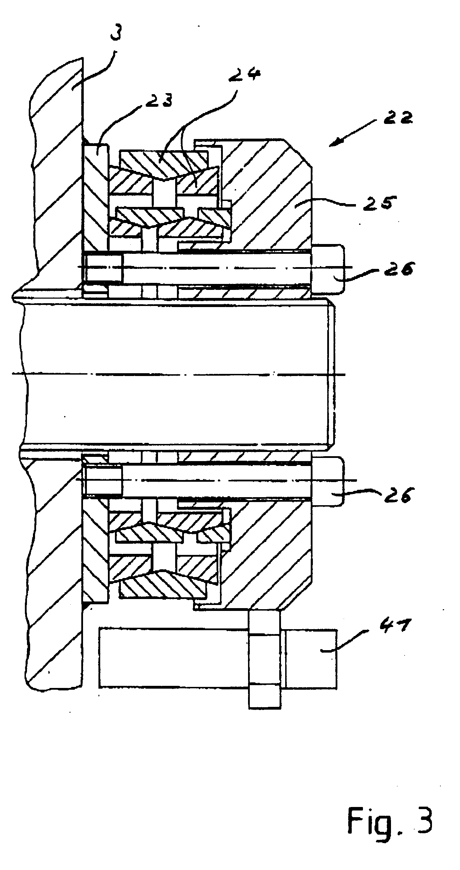

Gemäß Fig. 3 besteht das Ringfederelement 22 aus einer Druckplatte 23, einer Ringfeder 24 und einem Druckflansch 25. Über die die Druckplatte 23 und den Druckflansch 25 verbindenden Aufnahmeschrauben 26 wird die erforderliche Vorspannung der Ringfederelemente 22 eingestellt und zumindest solange aufrechterhalten bis die Schraubverbindungen 21 hergestellt sind. Als Mutter 20 kann dabei auch der mit Gewinde versehene Druckflansch 25 dienen. Im eingebauten Zustand kann die Druckplatte 23, wie dargestellt, mit der entsprechenden Innenseite der jeweiligen Säule 2, 3 verschweißt sein.

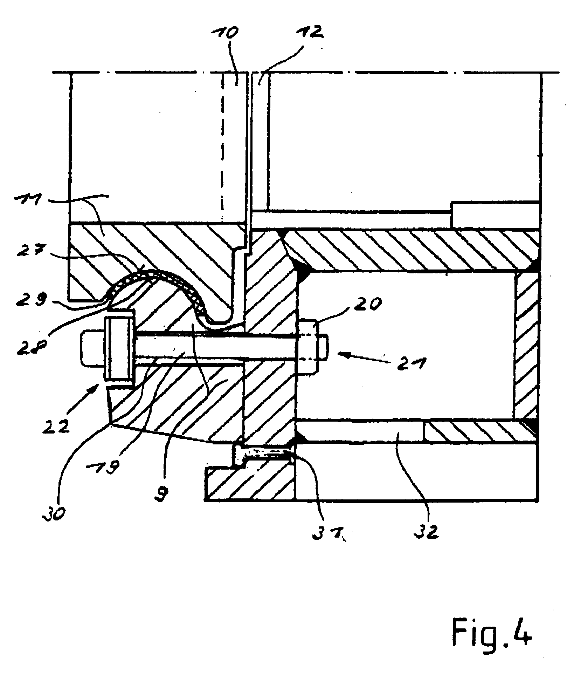

In der Ausführungsvariante nach Fig. 4 ist das vorgespannte Ringfederelement 22 alternativ zu der Anordnung gemäß Fig. 2 und 3 zwischen dem Schraubenkopf der Schraube 19 und der Gleitleiste 9 vorgesehen. Auch kann auf jeder der beiden Seiten ein vorgespanntes Ringfederelement 22 vorgesehen sein. Weiterhin kann ein Positionstausch von Schraube 19 und Mutter 20 erfolgen.

Die der Vertikalführung des Messerschlittens 11 dienenden, korrespondierenden Flächen 27, 28 am Messerschlitten 11 und an den Gleitleisten 8, 9 weisen einen im wesentlichen konstanten und annähernd übereinstimmenden Krümmungsradius auf. Hierdurch führt ein elastisches Ausweichen des Messerschlittens 11 nicht zu einer erhöhten Flächenpressung einzelner Bereiche der Flächen 27, 28 und damit nicht zu einem höheren Verschleiß der bei dieser Ausführungsvariante vorgesehenen Gleitrinnen 29. Bei Abnutzung der Gleitrinnen 29 und damit vergrößertem Spiel zwischen dem Messerschlitten 11 und den Gleitleisten 8, 9 kann eine Nachstellung der Gleitleisten 8, 9 erfolgen, indem die Schraubverbindungen 21 gelöst, eine oder beide Gleitleisten 8, 9 an Langlöchern 30 in Richtung Messerschlitten 11 verschoben, ein Ausgleichskörper 31 durch einen entsprechender Größe ersetzt und nachfolgend die Schraubverbindung 21 wieder hergestellt wird.

Um diese Arbeiten, wie auch das erstmalige Herstellen der Schraubverbindungen 21, zu erleichtern, ist das mutterseitige Ende der Schraubverbindung 21 durch eine Öffnung 32 in der Säule 3 des Scherenständers 1 zugänglich.

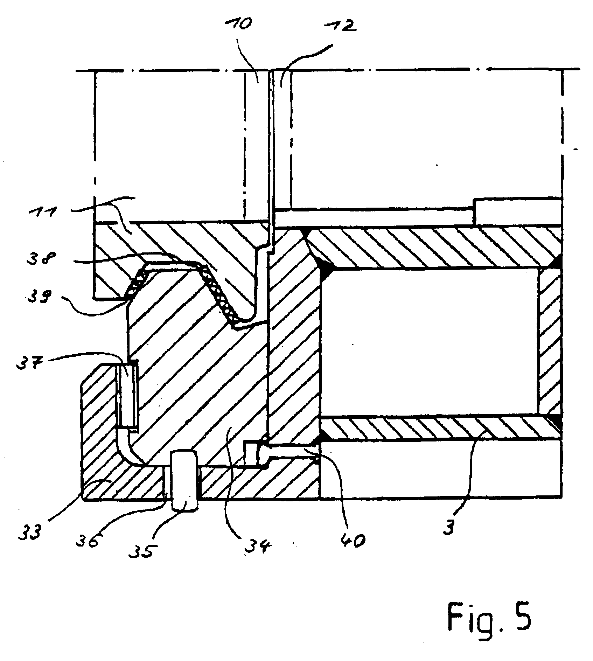

Gemäß der Ausführung nach Fig. 5 ist ein Winkelprofil 33 Bestandteil der Säule 3 des Scherenständers 1. Eine Gleitleiste 34 weist Bolzen 35 auf, die in horizontal angeordnete. Langlöcher 36 des Winkelprofils 33 eingreifen. Zwischen dem freien Ende des Winkelprofils 33 und der Gleitleiste 34 ist eine elastische Schicht 37 vorgesehen, die sich kontinuierlich und im wesentlichen über die gesamte Länge der Gleitleiste 34 erstreckt. Kommt als elastische Schicht 37 eine durch einen Festkörper gekapselte Flüssigkeit zum Einsatz, so ist der im System vorherrschende Hydraulikdruck ein Maß für die erreichte Vorspannung. Bei Überschreiten der Vorspannung wird über ein Druckbegrenzungsventil Flüssigkeit dem System entzogen, wobei die Flüssigkeit zur Herstellung des Ausgangszustandes wieder eingespeist werden kann.

An der Gleitleiste 34 ist eine Trapezführung für den eine entsprechende Aussparung aufweisenden Messerschlitten 11 vorgesehen Diese Art der Führung des Messerschlittens 11 wird vorrangig für Schrott, der dem Abscheren nur einen relativ geringen Widerstand entgegensetzt und damit nur zu vernachlässigbaren Verformungen des Messerschlittens 11 führt, eingesetzt. Der beim Schervorgang unterschiedlich starken Beanspruchung der Trapezführung ist entsprochen, indem die Gleitbahn 38 eine größere wirksame Fläche als die Gleitbahn 39 aufweist. Zum Ausgleich übermäßigen Spiels an der Trapezführung wird die Gleitleiste 34 in Richtung Messerschlitten 11 verschoben und deren Endlage durch einen Ausgleichskörper 40 festgelegt.

In Vorbereitung des Schervorganges wird der in die Zuführmulde 13 aufgegebene Schrott vom Stempel 14 in den Scherbereich verschoben und durch den Stampfer 15 niedergehalten. Infolge der Vertikalbewegung des Messerschlittens 11 kommt es zu einem Trennen des Schrottes zwischen dem mit dem Messerschlitten 11 bewegten Obermesser 10 und dem gegenüber diesem starr angeordneten Untermesser 12.

Enthält der Schrott Bestandteile mit geringem Widerstandsmoment, die vom Obermesser 10 in den Scherspalt gebogen werden und/oder zeigt das Obermesser 10 Verschleißerscheinungen vorrangig an der Schneidkante, so versucht der Messerschlitten 11 min dem Obermesser 10 auszuweichen. Daran ist er bis zum Erreichen einer bestimmten, vorwählbaren Vorspannung, die sich aus der Gesamtheit der Vorspannungen der einzelnen elastischen Elemente 22, 37 ergibt, gehindert. Erst nach Überschreiten dieser Vorspannung wird der Normalbetrieb der Schere unterbrochen, indem sich der Messerschlitten 11 aus der Scherebene herausbewegt und damit einen größeren Scherspalt freigibt. Ein Verklemmen des Schrottes tritt daher nur im vergrößerten Scherspalt auf. Ein solches Verklemmen wird grundsätzlich durch die Aufwärtsbewegung des Messerschlittens 11 behoben werden können. Sollte in Ausnahmefällen die Klemmkraft so groß sein, daß der Messeerschlitten 11 nicht mehr verschoben werden kann, ist seine Verschiebbarkeit wiederherstellbar, indem bspw. die Vorspannung der Ringfederelemente 22 durch die Aufnahmeschrauben 26 erhöht wird.
Aus der Häufigkeit
und der Art des Ausweichens des Messerschlittens 11 kann auf den Verschleißgrad von Obermesser 10 und Untermesser 12 geschlossen werden. Hierzu ist, bspw. wie in Fig. 3 dargestellt, ein Sensor 41 im Bereich der Ringfederelemente 22 angeordnet, der Abstandsänderungen des Druckflansches 25 von der einen Seite der Säule 3 des Scherenständers 1 erfaßt, die den Abstandsänderungen der gegenüberliegenden Seite der Säule 3 des Scherenständers 1 von den Gleitleisten 8, 9, 34 entsprechen. Weiterhin dient der Sensor 41 dem Erkennen des noch verfügbaren Restfederweges der Ringfederelemente 22 , so daß zur Vermeidung von Störfällen bei Erreichen eines minimalen Restfederweges die Schere abgeschaltet werden kann.

## Patentansprüche

1. Schere zum Trennen von Schrott, mit einem Scherenständer (1), an dem ein Messerschlitten (11) in am Scherenständer (1) angeordneten Führungen (8, 9, 34) vertikal verschiebbar ist, einem vom Messerschlitten (11) getragenen ersten Messer (10) und einem mit diesem zusammenwirkenden, am Scherenständer (1) fest angeordneten zweiten Messer (12), dadurch gekennzeichnet, daß der Messerschlitten (11) entgegen der Wirkung elastischer Elemente (22, 37) im wesentlichen senkrecht zur Scherebene unter Bildung eines breiteren Scherspaltes bewegbar ist.

2. Schere nach Anspruch 1, dadurch gekennzeichnet, daß die Führungen (8, 9) des Messerschlittens (11) entgegen der Wirkung elastischer Elemente (22, 37) im wesentlichen senkrecht zur Scherebene bewegbar sind.

3. Schere nach Anspruch 2, dadurch gekennzeichnet, daß die elastischen Elemente (22, 37) eine Vorspannung aufweisen.

4. Schere nach Anspruch 3, dadurch gekennzeichnet, daß sich die durchschnittliche Vorspannung der der einen Führung (8, 9) zuzuordnenden elastischen Elemente (22, 37) von der durchschnittlichen Vorspannung der der anderen Führung (9, 8) zuzuordnenden elastischen Elemente (22, 37) unterscheidet.

5. Schere nach Anspruch 4, dadurch gekennzeichnet, daß eine der Führungen (8, 9) starr und die andere Führung (9, 8) über ein vorgespanntes elastisches Element (22, 37) mit dem Scherenständer (1) verbunden ist.

6. Schere nach einem der Ansprüche 1 bis 5, dadurch gekennzeichnet, daß die elastischen Elemente (22) als Einzelelemente im wesentlichen über den gesamten Verschiebeweg des Messerschlittens (11) verteilt sind.

7. Schere nach einem der Ansprüche 1 bis 5, dadurch gekennzeichnet, daß sich zu beiden Seiten des Messerschlittens (11) jeweils ein elastisches Element (37) im wesentlichen über den gesamten Verschiebeweg des Messerschlittens (11) erstreckt.

8. Schere nach Anspruch 6, dadurch gekennzeichnet, daß die elastischen Elemente als Ringfederelemente (22) ausgebildet sind.

9. Schere nach Anspruch 8, dadurch gekennzeichnet, daß das Ringfederelement (22) aus einer Druckplatte (23), einem Druckflansch (25) und einer zwischenliegenden Ringfeder (24) besteht, wobei die Vorspannung durch die Druckplatte (23) und den Druckflansch (25) verbindende Aufnahmeschrauben (26) hergestellt ist.

10. Schere nach Anspruch 8 oder 9, dadurch gekennzeichnet, daß die Führungen (8, 9) und die elastischen Elemente (22) durch Schraubverbindungen (21) am Scherenständer (1) befestigt sind.

11. Schere nach einem der vorgenannten Ansprüche, dadurch gekennzeichnet, daß die Führungen (34) und die elastischen Elemente (37) senkrecht zur Scherebene betrachtet , formschlüssig in den Scherenständer (1) eingefügt sind.

12. Schere nach einem der vorgenannten Ansprüche, dadurch gekennzeichnet, daß die der Vertikalführung des Messerschlittens (11) dienenden korrespondierenden Flachen (27, 28) am Messerschlitten (11) und an den Führungen (8, 9) einen im wesentlichen konstanten und annähernd übereinstimmenden Krümmungsradius aufweisen.

## Claims

1. Shears for severing scrap metal, with a shears stand (1) on which a cutter slide (11) is capable of being displaced vertically in guide channels (8, 9, 34) arranged on the shears stand (1), a first cutter (10) borne by the cutter slide (11) and a second cutter (12) interacting with said first cutter and firmly arranged on the shears stand (1), characterised in that the cutter slide (11) is capable of being moved in opposition to the action of elastic elements (22, 37) substantially perpendicular to the plane of the shears subject to formation of a wider shear gap.

2. Shears according to Claim 1, characterised in that the guide channels (8, 9) of the cutter slide (11) are capable of being moved in opposition to the action of elastic elements (22, 37) substantially perpendicular to the plane of the shears.

3. Shears according to Claim 2, characterised in that the elastic elements (22, 37) are prestressed.

4. Shears according to Claim 3, characterised in that the average prestressing of the elastic elements (22, 37) to be assigned to the one guide channel (8, 9) differs from the average prestressing of the elastic elements (22, 37) to be assigned to the other guide channel (9, 8).

5. Shears according to Claim 4, characterised in that one of the guide channels (8, 9) is rigidly connected to the shears stand (1) and the other guide channel (9, 8) is connected to the shears stand (1) via a prestressed elastic element (22, 37).

6. Shears according to one of Claims 1 to 5, characterised in that the elastic elements (22) are distributed as individual elements over substantially the entire displacement path of the cutter slide (11).

7. Shears according to one of Claims 1 to 5, characterised in that an elastic element (37) extends on either side of the cutter slide (11) over substantially the entire displacement path of the cutter slide (11).

8. Shears according to Claim 6, characterised in that the elastic elements are designed as annular spring elements.

9. Shears according to Claim 8, characterised in that the annular spring element (22) consists of a pressure plate (23), a pressure flange (25) and an intermediate annular spring (24), whereby the prestressing is produced by take-up screws (26) connecting the pressure plate (23) and the pressure flange (25).

10. Shears according to Claim 8 or 9, characterised in that the guide channels (8, 9) and the elastic elements (22) are secured to the shears stand (1) by screw connections (21).

11. Shears according to one of the aforementioned claims, characterised in that, viewed at right angles to the plane of the shears, the guide channels (34) and the elastic elements (37) are inserted into the shears stand (1) in interlocking manner.

12. Shears according to one of the aforementioned claims, characterised in that the corresponding surfaces (27, 28) of the cutter slide (11) and of the guide channels (8, 9) serving to guide the cutter slide (11) vertically exhibit a substantially constant and approximately coincident radius of curvature.

## Revendications

1. Cisaille à ferrailles, comprenant un bâti (1) sur lequel un chariot (11) porte-couteaux peut coulisser verticalement dans des guides (8, 9, 34) disposés sur ledit bâti (1), un premier couteau (10) porté par le chariot (11) porte-couteaux, et un second couteau (12) coopérant avec ledit couteau et occupant une position fixe sur le bâti (1) de la cisaille, caractérisée par le fait que le chariot (11) porte-couteaux est mobile pour l'essentiel perpendiculairement au plan de la cisaille, en s'opposant à l'action d'éléments élastiques (22, 37), en formant un interstice de cisaillement plus large.

2. Cisaille selon la revendication 1, caractérisée par le fait que les guides (8, 9) du chariot (11) porte-couteaux sont mobiles pour l'essentiel perpendiculairement au plan de la cisaille, en s'opposant à l'action d'éléments élastiques (22, 37).

3. Cisaille selon la revendication 2, caractérisée par le fait que les éléments élastiques (22, 37) accusent une précharge.

4. Cisaille selon la revendication 3, caractérisée par le fait que la précharge moyenne des éléments élastiques (22, 37), devant être affectés à l'un des guides (8, 9), est différente de la précharge moyenne des éléments élastiques (22, 37) devant être affectés à l'autre guide (9, 8).

5. Cisaille selon la revendication 4, caractérisée par le fait que l'un des guides (8, 9) est relié rigidement au bâti (1) de la cisaille, et l'autre guide (9, 8) est relié audit bâti par l'intermédiaire d'un élément élastique (22, 37) préchargé.

6. Cisaille selon l'une des revendications 1 à 5, caractérisée par le fait que les éléments élastiques (22) sont répartis, en tant qu'éléments individuels, pour l'essentiel sur toute la course de coulissement du chariot (11) porte-couteaux.

7. Cisaille selon l'une des revendications 1 à 5, caractérisée par le fait qu'un élément élastique (37) s'étend respectivement de part et d'autre du chariot (11) porte-couteaux, pour l'essentiel sur toute la course de coulissement dudit chariot (11) porte-couteaux.

8. Cisaille selon la revendication 6, caractérisée par le fait que les éléments élastiques sont réalisés sous la forme d'éléments élastiques annulaires (22).

9. Cisaille selon la revendication 8, caractérisée par le fait que l'élément élastique annulaire (22) se compose d'une plaque de pression (23), d'une aile de pression (25) et d'un ressort annulaire intercalaire (24), la précharge étant établie par des tirants de réception (26) solidarisant la plaque de pression (23) et l'aile de pression (25).

10. Cisaille selon la revendication 8 ou 9, caractérisée par le fait que les guides (8, 9) et les éléments élastiques (22) sont fixés au bâti (1) de la cisaille par l'intermédiaire de liaisons vissées (21).

11. Cisaille selon l'une des revendications précitées, caractérisée par le fait que les guides (34) et les éléments élastiques (37), considérés perpendiculairement au plan de la cisaille, sont intégrés par concordance de formes dans le bâti (1) de ladite cisaille.

12. Cisaille selon l'une des revendications précitées, caractérisée par le fait que les surfaces correspondantes (27, 28), ménagées sur le chariot (11) porte-couteaux et sur les guides (8, 9) et servant au guidage vertical dudit chariot (11) porte-couteaux, présentent un rayon de courbure pour l'essentiel constant et approximativement concordant.
